# EUROPEAN PATENT APPLICATION

(11) **EP 4 786 254 A1**
(43) Date of publication of application: **05.08.2026**
(21) Application number: 24892758.4
(22) Date of filing: 14.06.2024
(51) Int. Cl.: B60L 50/62, B60L 15/20

(54) **RANGE-EXTENDED ELECTRIC VEHICLE AND FIXED-POINT CONTROL METHOD AND APPARATUS THEREFOR, AND STORAGE MEDIUM**

(30) Priority: 21.11.2023 CN 202311566643
(71) Applicant: Dongfeng Motor Group Co., Ltd., Wuhan, Hubei 430056 (CN)
(72) Inventor: CHEN, Kepeng, Wuhan, Hubei 430056 (CN); WU, Jingyu, Wuhan, Hubei 430056 (CN); WEI, Shuang, Wuhan, Hubei 430056 (CN)
(74) Representative: Lohmanns Lohmanns & Partner mbB
(86) International application number: PCT/CN2024/099315
(87) International publication number: WO 2025/107593

(57) **Abstract**

A range extender control method of a range-extended electric vehicle. The method is applied to the technical field of hybrid vehicle power supply, and comprises: when the speed of a range-extended electric vehicle is in a first speed interval, controlling a range extender to operate at a first preselected operating point, the first preselected operating point being adapted to the first speed interval; and if the speed of the range-extended electric vehicle increases from the first speed interval to a second speed interval, controlling the range extender to sequentially switch from the first preselected operating point to a transition operating point and a second preselected operating point adapted to the second speed interval to operate, the power generation power of the range extender at the transition operating point being the same as the power generation power at the first preselected operating point, and the engine rotating speed at the transition operating point being less than the engine rotating speed at the first preselected operating point. The range extender control method at least reduces the technical problem of large NVH noise caused by vehicle speed changes to a range extender. Also provided are an apparatus for implementing the range extender control method, and a storage medium.

## Description

### Field of the Invention

The present invention relates to the technical field of hybrid vehicle power supply, and in particular to a range-extended electric vehicle, and a fixed-point control method and apparatus therefor, and a storage medium.

### Background of the Invention

Currently, electric vehicles equipped with a range-extended powertrain system are increasingly popular in the market. Compared with conventional vehicles, the range-extended powertrain system achieves a significant reduction in vehicle fuel consumption and emissions through matching high-efficiency operating points of the engine; compared with hybrid electric vehicle (HEV) and plug-in hybrid electric vehicle (PHEV) models, a range-extended electric vehicle can alleviate range anxiety to the greatest extent, while simultaneously achieving the driving range of conventional vehicles and the driving experience of pure electric vehicles.

In the architecture of a range extended electric vehicle (REEV), the range extender is only used to provide electric power, and the engine of the range extender does not participate in direct vehicle propulsion, such that the range extender is completely decoupled from the operation of the whole vehicle, and the operating point of the range extender has no direct relationship with vehicle speed. In the prior art, when a fixed-point control strategy is used to control the range extender, switching between different operating points results in poor noise, vibration and harshness (NVH) performance.

### Summary of the Invention

The embodiments of the present invention provide a range-extended electric vehicle, and a fixed-point control method and apparatus therefor, and a storage medium, for solving the technical problem in the prior art that, when the fixed-point control strategy is adopted to control the range extender, switching between different operating points results in poor NVH performance. The present invention improves the NVH performance while also taking economy into consideration.

In a first aspect of the present invention, a fixed-point control method for a range extender is provided, comprising: when a vehicle speed of a range-extended electric vehicle is in a first vehicle speed interval, controlling the range extender of the range-extended electric vehicle to operate at a first preselected operating point, wherein the first preselected operating point is adapted to the first vehicle speed interval; and if the vehicle speed of the range-extended electric vehicle decreases from the first vehicle speed interval to a second vehicle speed interval, controlling the range extender to successively switch from the first preselected operating point to a target transition operating point and a second preselected operating point adapted to the second vehicle speed interval to operate during the vehicle speed decreasing process of the range-extended electric vehicle, wherein a generated power of the range extender at the target transition operating point is equal to that at the first preselected operating point, and an engine rotating speed at the target transition operating point is less than that at the first preselected operating point.

In combination with the first aspect, in some embodiments, the step of controlling the range extender to successively switch from the first preselected operating point to the target transition operating point and the second preselected operating point adapted to the second vehicle speed interval to operate during the vehicle speed decreasing process of the range-extended electric vehicle comprises: when the range extender operates at the first preselected operating point, if the vehicle speed of the range-extended electric vehicle decreases to meet a first preset condition, controlling the range extender to switch from the first preselected operating point to the target transition operating point to operate; and when the range extender operates at the target transition operating point, if the vehicle speed of the range-extended electric vehicle decreases to meet a second preset condition, controlling the range extender to switch from the target transition operating point to the second preselected operating point to operate; wherein the first preset condition and the second preset condition at least define the vehicle speed upper limit of the range-extended electric vehicle, and the vehicle speed upper limit defined by the second preset condition is lower than that defined by the first preset condition.

In combination with the first aspect, in some embodiments, before the step of controlling the range extender of the range-extended electric vehicle to operate at the first preselected operating point, the method further comprises: when the range extender is in a shutdown state, monitoring a remaining state of charge of a power battery of the range-extended electric vehicle; and if it is determined that the power battery enters a power-depleting state based on the remaining state of charge of the power battery, starting the range extender and determining the first preselected operating point according to a current vehicle speed of the range-extended electric vehicle.

In combination with the first aspect, in some embodiments, the step of determining the first preselected operating point according to the current vehicle speed of the range-extended electric vehicle comprises: determining the first vehicle speed interval in which the current vehicle speed of the range-extended electric vehicle is located from M vehicle speed intervals pre-divided, wherein M preselected operating points configured to operate the range extender are provided in one-to-one correspondence with the M vehicle speed intervals, and M is an integer greater than 1; and selecting a preselected operating point corresponding to the first vehicle speed interval as the first preselected operating point.

In combination with the first aspect, in some embodiments, the method further comprises: when the range extender operates at the first preselected operating point, if a maintained duration for which the vehicle speed of the range-extended electric vehicle decreases to be less than a first vehicle speed threshold and not less than a second vehicle speed threshold reaches a first duration threshold, determining that the vehicle speed of the range-extended electric vehicle decreases to meet the first preset condition; wherein the second vehicle speed interval is adjacent to the first vehicle speed interval, the first vehicle speed threshold and the second vehicle speed threshold are within the second vehicle speed interval, and the second vehicle speed threshold is lower than the first vehicle speed threshold.

In combination with the first aspect, in some embodiments, the method further comprises: when the range extender operates at the target transition operating point, if a maintained duration for which the vehicle speed of the range-extended electric vehicle decreases to be less than the second vehicle speed threshold and not less than a lower limit of the second vehicle speed interval reaches a second duration threshold, determining that the vehicle speed of the range-extended electric vehicle decreases to meet the second preset condition.

In combination with the first aspect, in some embodiments, the method further comprises: when the range extender operates at the first preselected operating point, if the vehicle speed of the range-extended electric vehicle increases from the first vehicle speed interval to a third vehicle speed interval, selecting a third preselected operating point corresponding to the third vehicle speed interval from the M preselected operating points, wherein the generated power of the range extender at the third preselected operating point is greater than that at the first preselected operating point; and controlling the range extender to switch from the first preselected operating point to the third preselected operating point to operate.

In combination with the first aspect, in some embodiments, after the step of starting the range extender, the method further comprises: when the range extender is in an operating state, monitoring the remaining state of charge of the power battery; if the remaining state of charge of the power battery is in a decreasing trend, determining a target vehicle speed interval in which the current vehicle speed of the range-extended electric vehicle is located from the M vehicle speed intervals, wherein M high-efficiency operating points are provided in one-to-one correspondence with the M vehicle speed intervals, and for the same vehicle speed interval in which a preselected operating point and a high-efficiency operating point are configured, the generated power of the range extender at the high-efficiency operating point is greater than that at the preselected operating point; and acquiring the high-efficiency operating point corresponding to the target vehicle speed interval, and controlling the range extender to switch from the current operating point to the high-efficiency operating point corresponding to the target vehicle speed interval to operate.

In combination with the first aspect, in some embodiments, after the step of starting the range extender, the method further comprises: when the range extender is in an operating state, monitoring the remaining state of charge of the power battery; and if it is detected that the remaining state of charge of the power battery rises to a target state of charge, shutting down the range extender.

In combination with the first aspect, in some embodiments, the M preselected operating points are optimal efficiency points corresponding to M different generated powers provided by the range extender.

In combination with the first aspect, in some embodiments, for each of the M preselected operating points, one or more transition operating points adapted to the preselected operating point are respectively configured.

In a second aspect of the present invention, a range extender control apparatus for a range-extended electric vehicle is provided, comprising: a control unit, which is configured to, when a vehicle speed of a range-extended electric vehicle is in a first vehicle speed interval, control the range extender of the range-extended electric vehicle to operate at a first preselected operating point, wherein the first preselected operating point is adapted to the first vehicle speed interval; and an exit switching unit, which is configured to, if the vehicle speed of the range-extended electric vehicle decreases from the first vehicle speed interval to a second vehicle speed interval, control the range extender to successively switch from the first preselected operating point to a target transition operating point and a second preselected operating point adapted to the second vehicle speed interval to operate during the vehicle speed decreasing process of the range-extended electric vehicle, wherein a generated power of the range extender at the target transition operating point is equal to that at the first preselected operating point, and an engine rotating speed at the target transition operating point is less than that at the first preselected operating point.

In combination with the second aspect, in some embodiments, the exit switching unit comprises: a first switching sub-unit, which is configured to, when the range extender operates at the first preselected operating point, if the vehicle speed of the range-extended electric vehicle decreases to meet a first preset condition, control the range extender to switch from the first preselected operating point to the target transition operating point to operate; and a second switching sub-unit, which is configured to, when the range extender operates at the target transition operating point, if the vehicle speed of the range-extended electric vehicle decreases to meet a second preset condition, control the range extender to switch from the target transition operating point to the second preselected operating point to operate; wherein the first preset condition and the second preset condition at least define the vehicle speed upper limit of the range-extended electric vehicle, and the vehicle speed upper limit defined by the second preset condition is lower than that defined by the first preset condition.

In a third aspect of the present invention, a range-extended electric vehicle is provided, comprising a memory, a processor, and a computer program stored on the memory and executable on the processor, and the processor, when executing the computer program, implements the steps of the method according to any embodiment of the first aspect.

In a fourth aspect of the present invention, a computer-readable storage medium is provided, with a computer program stored thereon, and the program, when executed by a processor, implements the steps of the method according to any embodiment of the first aspect.

One or more technical solutions provided in the embodiments of the present invention achieve at least the following technical effects or advantages:
in the embodiments of the present invention, when the vehicle speed of the range-extended electric vehicle decreases from the first vehicle speed interval to the second vehicle speed interval, the range extender is controlled to successively switch from the first preselected operating point adapted to the first vehicle speed interval to the target transition operating point and the second preselected operating point adapted to the second vehicle speed interval to operate, the generated power of the range extender at the target transition operating point is equal to that at the first preselected operating point, and the engine rotating speed at the target transition operating point is less than that at the first preselected operating point. The above technical solution additionally introduces the transition operating point, such that during the vehicle speed decreasing process after the range extender exits the first preselected operating point, the engine torque is first increased and the engine rotating speed is reduced to achieve the same generated power as the first preselected operating point, and since the lower engine rotating speed of the range extender results in the better NVH performance, reducing the engine rotating speed enables the NVH performance to meet the requirements of relatively higher vehicle speed points within the second vehicle speed interval without reducing the generated power, thereby improving the NVH performance. As the vehicle speed continues to decrease, the range extender is then switched to the second preselected operating point adapted to the second vehicle speed interval to operate, thereby also taking economy into consideration.

### Brief Description of the Drawings

In order to better illustrate the embodiments of the present invention or the technical solutions in the prior art, the following will briefly introduce the drawings needed in the description of the embodiments or the prior art, and it is obvious that the drawings in the following description are only a part of embodiments of the present invention, for those of ordinary skill in the art, other drawings may also be obtained based on these drawings without any inventive work.
Fig. 1 is a flowchart of a fixed-point control method for a range extender in the embodiment of the present invention;
Fig. 2 is a schematic diagram showing a relationship between a transition operating point and a preselected operating point in the embodiment of the present invention;
Fig. 3 is a functional block diagram of a fixed-point control apparatus for a range extender in the embodiment of the present invention;
Fig. 4 is a structural diagram of a range-extended electric vehicle in the embodiment of the present invention.

### Detailed Description of the Embodiments

The embodiments of the present invention provide a range-extended electric vehicle, and a fixed-point control method and apparatus therefor, and a storage medium, so as to solve the technical problem in the prior art that switching between different operating points results in poor NVH performance when a fixed-point control strategy is adopted to control the range extender.

The technical solutions in the embodiments of the present invention aim to solve the above technical problem, and the overall approach is as follows:
when the vehicle speed of the range-extended electric vehicle decreases from the first vehicle speed interval to the second vehicle speed interval, the range extender is controlled to successively switch from the first preselected operating point adapted to the first vehicle speed interval to the target transition operating point and the second preselected operating point adapted to the second vehicle speed interval to operate, the generated power of the range extender at the target transition operating point is equal to that at the first preselected operating point, and the engine rotating speed at the target transition operating point is less than that at the first preselected operating point.

In order to make the objectives, technical solutions, and advantages of the embodiments of the present invention more apparent, the technical solutions in the embodiments of the present invention will be clearly and completely described below with reference to the drawings. It is apparent that the described embodiments are only part of the embodiments of the present invention, rather than all of them. Based on the embodiments in the present invention, all other embodiments obtained by those of ordinary skill in the art without inventive efforts shall fall within the protection scope of the present invention.

First, it should be noted that the term "and/or" appearing herein merely represents the association relationship of associated objects, indicating that three relationships may exist. For example, A and/or B can represent three situations: the existence of A alone, the simultaneous existence of both A and B, or the existence of B alone. In addition, the symbol "/" herein generally indicates that the preceding and following associated objects are in an "or" relationship.

In a fixed-point control strategy for a range extender, in order to prevent frequent switching of operating points or frequent start-stop of the range extender, hysteresis control is performed when the range extender exits an operating point. That is, the operating point is entered when the vehicle speed is greater than or equal to a target speed, and the operating point is exited only when the vehicle speed is less than the target speed minus a hysteresis speed. Accordingly, within the vehicle speed interval where the vehicle speed decreases to be less than the target speed but not less than the target speed minus the hysteresis speed, the range extender continues to operate at the operating point, resulting in the engine rotating speed of the range extender that is relatively high with respect to the vehicle speed and mismatched with the reduced vehicle speed, thereby causing a high level of NVH noise. To this end, the embodiments of the present invention provide a fixed-point control method for a range extender, so as to at least solve the above technical problems.

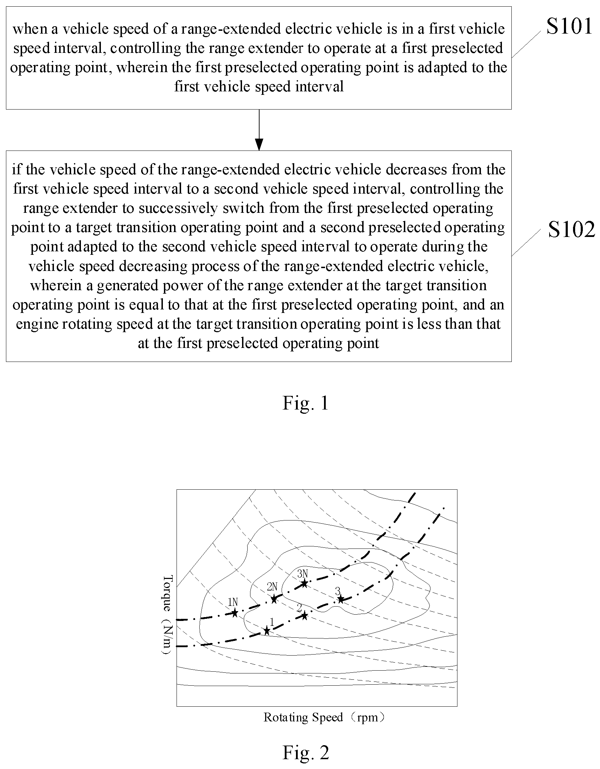

Fig. 1 is a flowchart of a fixed-point control method for a range extender in the embodiment of the present invention. As shown in Fig. 1, the fixed-point control method for the range extender comprises S101 to S102.

S101. When a vehicle speed of a range-extended electric vehicle is in a first vehicle speed interval, the range extender is controlled to operate at a first preselected operating point, and the first preselected operating point is adapted to the first vehicle speed interval.

In some embodiments, the vehicle speed range of the range-extended electric vehicle can be divided into M vehicle speed intervals according to actual control requirements, M is an integer greater than 1, and the M vehicle speed intervals have no overlapping regions and collectively cover the entire speed range. Due to the influence of driving scenarios of the range-extended electric vehicle, driving habits of users, and the like, the vehicle speed of the range-extended electric vehicle continuously changes, and the vehicle speed interval in which the vehicle is located also changes. Therefore, the first vehicle speed interval in S101 does not specifically refer to a certain vehicle speed interval, but can be any one of the M vehicle speed intervals.

It can be understood that the M vehicle speed intervals can have equal lengths or unequal lengths. The vehicle speed range can be divided into M equal-length vehicle speed intervals according to a preset step size, and the M vehicle speed intervals can be half-open intervals comprising a lower vehicle speed limit but excluding an upper vehicle speed limit. For example, the preset step size can be 10 km/h, 20 km/h, or 30 km/h, and the like.

In some embodiments, before entering S101, the fixed-point control method for the range extender provided in the embodiments of the present invention can further comprise: when the range-extended electric vehicle is in a starting state, a remaining state of charge of a power battery of the range-extended electric vehicle is monitored; if it is determined that the power battery enters a power-depleting state based on the remaining state of charge of the power battery, the range extender is started and the first preselected operating point is determined according to the current vehicle speed of the range-extended electric vehicle. It can be understood that when the remaining state of charge of the power battery is lower than a calibrated state-of-charge threshold, the power battery is determined to enter the power-depleting state. The power-depleting state refers to a state in which the state of charge stored in the power battery is insufficient to drive the vehicle to operate, and the range extender is required to participate in order for the vehicle to operate normally. The state-of-charge threshold for entering the power-depleting state varies among different models and brands of hybrid vehicles, and the state-of-charge threshold can be set within a range of 10% to 30%.

In other embodiments, before entering S101, the fixed-point control method for the range extender provided in the embodiments of the present invention can further comprise: when the range-extended electric vehicle is in a starting state, a remaining state of charge of a power battery is monitored, and whether the power battery enters a power-depleting state is determined based on the remaining state of charge; if it is detected that the power battery enters the power-depleting state and the vehicle speed of the range-extended electric vehicle reaches a preset lower vehicle speed limit, the range extender is started and the first preselected operating point is determined according to the current vehicle speed of the range-extended electric vehicle. For example, the preset lower vehicle speed limit can be customized according to application scenarios and can be set to 20 km/h.

In some embodiments, the step of determining the first preselected operating point according to the current vehicle speed of the range-extended electric vehicle comprises: the first vehicle speed interval in which the current vehicle speed of the range-extended electric vehicle is located is determined from M vehicle speed intervals pre-divided, M preselected operating points configured to operate the range extender are provided in one-to-one correspondence with the M vehicle speed intervals, and M is an integer greater than 1; and a preselected operating point corresponding to the first vehicle speed interval is selected as the first preselected operating point.

In some embodiments, the M vehicle speed intervals are obtained through dividing the vehicle speed range defined by a preset lower vehicle speed limit and speeds above the preset lower vehicle speed limit, and the vehicle speed range can be divided into 2, 3, 4, or even more vehicle speed intervals. For example, taking a preset lower vehicle speed limit of 20 km/h as an example, the divided vehicle speed intervals are [20, 40), [40, 60), [60, 80), [80, 100), and [100, 120), etc., and when the vehicle speed is lower than 20 km/h, the range extender is not started.

It should be noted that each of the M preselected operating points is an optimal efficiency point at which the range extender provides the generated power required by the vehicle speed interval corresponding to the preselected operating point. The required generated power for each of the vehicle speed intervals refers to a power that enables the power battery to maintain a charge-discharge balance when the range-extended electric vehicle is driving within the vehicle speed interval. For each of the M vehicle speed intervals, the required generated power of the range extender for the vehicle speed interval is determined according to the overall vehicle power demand of the range-extended electric vehicle in the vehicle speed interval. More specifically, the required generated power of the range extender for the vehicle speed interval comprises a certain redundancy relative to the overall vehicle power demand of the range-extended electric vehicle in the vehicle speed interval, so as to enable the power battery to maintain the charge-discharge balance. Therefore, the preselected operating point corresponding to each of the vehicle speed intervals is obtained through pre-testing.

It can be understood that, as the vehicle speed of the range-extended electric vehicle changes, the vehicle speed can increase to a second vehicle speed interval higher than the first vehicle speed interval, or decrease to a third vehicle speed interval lower than the first vehicle speed interval. The following describes the two cases respectively.

If the first vehicle speed interval is any one of the M vehicle speed intervals other than the vehicle speed interval with the lowest vehicle speed, S102 can be performed: if the vehicle speed of the range-extended electric vehicle decreases from the first vehicle speed interval to a second vehicle speed interval, the range extender is controlled to successively switch from the first preselected operating point to a target transition operating point and a second preselected operating point adapted to the second vehicle speed interval to operate during the vehicle speed decreasing process of the range-extended electric vehicle, wherein a generated power of the range extender at the target transition operating point is equal to that at the first preselected operating point, and an engine rotating speed at the target transition operating point is less than that at the first preselected operating point.

It can be understood that each of the operating points configured to operate the range extender is jointly determined by the engine rotating speed and the engine torque of the range extender. In order to enable the range extender to achieve the same generated power at the target transition operating point and at the first preselected operating point, and to ensure that the engine rotating speed of the range extender at the target transition operating point is lower than that at the first preselected operating point, it is necessary to increase the engine torque of the range extender at the expense of fuel consumption, so that the engine torque at the target transition operating point is greater than that at the first preselected operating point, thereby reducing the engine rotating speed. Since the higher engine torque of the range extender results in the higher fuel consumption, and the lower engine rotating speed leads to the better NVH performance of the vehicle, the use of the target transition operating point improves the NVH performance when the vehicle speed of the range-extended electric vehicle decreases to relatively higher vehicle speed points within the first vehicle speed interval.

In some embodiments, for each of the M preselected operating points, one or more transition operating points adapted to the preselected operating point are correspondingly provided. For each of the preselected operating points, the generated power of the range extender at said preselected operating point is identical to that at the transition operating point adapted thereto. Compared with the preselected operating point, the transition operating point adapted thereto has a higher engine torque and a lower engine rotating speed. The transition operating point is configured to transition when the vehicle speed of the range-extended electric vehicle decreases from a higher vehicle speed interval to a lower vehicle speed interval of two adjacent vehicle speed intervals. Accordingly, when the range extender exits the preselected operating point adapted to the higher vehicle speed interval, it does not directly switch to another preselected operating point adapted to the lower vehicle speed interval.

If only one transition operating point is provided for the same preselected operating point, as shown in Fig. 2, taking an example in which the vehicle speed range is divided into three vehicle speed intervals, preselected operating points 1, 2, and 3 are correspondingly configured. A transition operating point 1N is configured corresponding to preselected operating point 1 for transition when exiting preselected operating point 1; a transition operating point 2N is configured corresponding to preselected operating point 2 for transition when exiting preselected operating point 2; and a transition operating point 3N is configured corresponding to preselected operating point 3 for transition when exiting preselected operating point 3. In Fig. 2, contour lines represent fuel consumption of the range extender, dashed lines represent generated power of the range extender, and preselected operating point 1 and transition operating point 1N correspond to the same generated power of the range extender.

If a plurality of different transition operating points are configured for the same preselected operating point, the generated power of the preselected operating point and each of the transition operating points configured therefor is identical, and the engine torque and engine rotating speed thereof are different from each other. Taking an example in which the vehicle speed range is divided into three vehicle speed intervals, and two transition operating points are configured for each of the preselected operating points, preselected operating points 1, 2, and 3 are correspondingly configured in one-to-one correspondence with the three vehicle speed intervals. Transition operating points 1N and 1N' adapted to preselected operating point 1 are configured for transition when exiting preselected operating point 1; transition operating points 2N and 2N' adapted to preselected operating point 2 are configured for transition when exiting preselected operating point 2; and transition operating points 3N and 3N' adapted to preselected operating point 3 are configured for transition when exiting preselected operating point 3.

In some embodiments, S102 can comprise: when the range extender operates at the first preselected operating point, if the vehicle speed of the range-extended electric vehicle decreases to meet a first preset condition, the range extender is controlled to switch from the first preselected operating point to the target transition operating point to operate; and when the range extender operates at the target transition operating point, if the vehicle speed of the range-extended electric vehicle decreases to meet a second preset condition, the range extender is controlled to switch from the target transition operating point to the second preselected operating point to operate, wherein the first preset condition and the second preset condition at least define the vehicle speed upper limit of the range-extended electric vehicle, and the vehicle speed upper limit defined by the second preset condition is lower than that defined by the first preset condition. It should also be noted that the target transition operating point is a transition operating point adapted to the first preselected operating point.

In some embodiments, when the range extender operates at the first preselected operating point, if a maintained duration for which the vehicle speed of the range-extended electric vehicle decreases to be less than a first vehicle speed threshold and not less than a second vehicle speed threshold reaches a first duration threshold, it is determined that the vehicle speed of the range-extended electric vehicle decreases to meet the first preset condition; wherein the second vehicle speed interval is adjacent to the first vehicle speed interval, the first vehicle speed threshold and the second vehicle speed threshold are within the second vehicle speed interval, and the second vehicle speed threshold is lower than the first vehicle speed threshold. Through setting the condition that switching to the target transition operating point is performed only when the maintained duration reaches the first duration threshold, frequent switching of operating points of the range extender is avoided, thereby improving the operational stability of the range extender. In other embodiments, when the vehicle speed of the range-extended electric vehicle decreases to be less than the first vehicle speed threshold and not less than the second vehicle speed threshold, it is directly determined that the vehicle speed of the range-extended electric vehicle decreases to meet the first preset condition.

In other embodiments, if the transition operating points adapted to the first preselected operating point comprise N transition operating points, N can be an integer in the range of 2 to 5, the N transition operating points are in one-to-one correspondence with N first vehicle speed thresholds, and the first vehicle speed threshold corresponding to the transition operating point with a larger engine torque is lower. When the range extender operates at the first preselected operating point, if the vehicle speed of the range-extended electric vehicle decreases, the target transition operating point is determined from the N transition operating points according to the vehicle speed decreasing condition of the range-extended electric vehicle, and the range extender is controlled to switch to the target transition operating point to operate. Specifically, for any transition operating point among the N transition operating points other than the one with the largest engine torque, when the maintained duration for which the vehicle speed decreases to be lower than the first vehicle speed threshold corresponding to the transition operating point and not lower than the first vehicle speed threshold corresponding to the next transition operating point reaches the first duration threshold, the transition operating point is determined as the target transition operating point. For the transition operating point with the largest engine torque among the N transition operating points, when the maintained duration for which the vehicle speed decreases to be lower than the first vehicle speed threshold corresponding to the transition operating point and not lower than the second vehicle speed threshold reaches the first duration threshold, the transition operating point is determined as the target transition operating point.

In some embodiments, when the range extender operates at the target transition operating point adapted to the first preselected operating point, if the maintained duration for which the vehicle speed of the range-extended electric vehicle decreases to be less than the second vehicle speed threshold and not less than the lower vehicle speed limit of the second vehicle speed interval reaches a second duration threshold, it is determined that the vehicle speed of the range-extended electric vehicle decreases to meet the second preset condition. In other embodiments, when the vehicle speed of the range-extended electric vehicle decreases to be less than the second vehicle speed threshold and not less than the lower vehicle speed limit of the second vehicle speed interval, it is directly determined that the vehicle speed of the range-extended electric vehicle decreases to meet the second preset condition.

In some embodiments, when the range extender operates at the target transition operating point adapted to the first preselected operating point, if the vehicle speed of the range-extended electric vehicle increases to be not less than the first vehicle speed threshold and the maintained duration thereof reaches a third duration threshold, the range extender is controlled to switch from the target transition operating point back to the first preselected operating point to operate.

It can be understood that the first duration threshold, the second duration threshold, and the third duration threshold can each be customized based on a user usage scenario. Specifically, each can be set within a range of 1 to 2 minutes, and identical duration values can be adopted. The first vehicle speed threshold and the second vehicle speed threshold can be set according to the lower vehicle speed limit of the first vehicle speed interval and the preset hysteresis speed. If only one transition operating point is configured for the first preselected operating point, the first vehicle speed threshold can be set to the lower vehicle speed limit of the first vehicle speed interval, and the second vehicle speed threshold cam be set to a difference between the lower vehicle speed limit of the first vehicle speed interval and the hysteresis speed. The hysteresis speed is smaller than the step size for dividing the vehicle speed intervals. For example, if the first vehicle speed interval is [v1, v2), the hysteresis speed is denoted as v0, and v0 satisfies v0<v2-v1. In some embodiments, v0 can be further limited to v0≤1/2 (v2-v1). On this basis, the first vehicle speed threshold is set as v1, and the second vehicle speed threshold is set as v1-v0. If the vehicle speed of the range-extended electric vehicle decreases to satisfy v1-v0≤vehicle speed<v1 and the maintained duration thereof is greater than or equal to the first duration threshold, the range extender is controlled to switch from the first preselected operating point to the target transition operating point to operate; and if the vehicle speed of the range-extended electric vehicle continues to decrease and decreases to satisfy v3≤vehicle speed<v1-v0 and the maintained duration thereof is greater than or equal to the second duration threshold, v3 is the lower vehicle speed limit of the second vehicle speed interval, the range extender is controlled to switch from the target transition operating point to the second preselected operating point adapted to the second vehicle speed interval to operate.

If N transition operating points are configured for the first preselected operating point, which differs from the above embodiment in which only one transition operating point is configured, there are N first vehicle speed thresholds. The first vehicle speed threshold corresponding to the transition operating point with the largest engine torque is set as the lower vehicle speed limit of the first vehicle speed interval. The remaining N-1 first vehicle speed thresholds corresponding to the other N-1 transition operating points are all lower than the lower vehicle speed limit of the first vehicle speed interval and greater than the difference between the lower vehicle speed limit of the first vehicle speed interval and the hysteresis speed. For example, if the first vehicle speed interval is [v1, v2) and the hysteresis speed is v0, taking an example in which two transition operating points are configured corresponding to the first preselected operating point, the two first vehicle speed thresholds are respectively v1 and v1-0.5v0, and the second vehicle speed threshold is v1-v0.

In some embodiments, if the first vehicle speed interval is the vehicle speed interval with the lowest vehicle speed among the M vehicle speed intervals, when the power battery is in a power-depleting state, if the vehicle speed of the range-extended electric vehicle decreases to the lower vehicle speed limit of the lowest vehicle speed interval and the maintained duration thereof reaches a fourth duration threshold, the range extender is shut down. Taking an example in which the vehicle speed interval with the lowest vehicle speed is [20, 40), when the maintained duration for which the vehicle speed of the range-extended electric vehicle is lower than 20 km/h reaches the fourth duration threshold, the range extender is shut down. In other embodiments, when the maintained duration for which the vehicle speed of the range-extended electric vehicle decreases to be less than the difference between the lower vehicle speed limit of the lowest vehicle speed interval and the hysteresis speed reaches the fourth duration threshold, the range extender is then shut down, thereby avoiding frequent start-stop of the range extender.

In some embodiments, the fixed-point control method for the range extender provided in the embodiments of the present invention can further comprise: when the range extender operates at the first preselected operating point, if the vehicle speed of the range-extended electric vehicle increases from the first vehicle speed interval to the third vehicle speed interval, the third preselected operating point corresponding to the third vehicle speed interval is selected from the M preselected operating points, and the generated power of the range extender at the third preselected operating point is greater than that at the first preselected operating point; and the range extender is controlled to switch from the first preselected operating point to the third preselected operating point to operate.

In other embodiments, if the vehicle speed of the range-extended electric vehicle increases from the first vehicle speed interval to the third vehicle speed interval, and the maintained duration in the third vehicle speed interval reaches the first duration threshold, the range extender is controlled to switch from the first preselected operating point to the third preselected operating point to operate, thereby avoiding frequent switching of operating points of the range extender. Specifically, when the vehicle speed of the range-extended electric vehicle increases to be not less than the lower vehicle speed limit of the third vehicle speed interval and the maintained duration thereof reaches a fifth duration threshold, the range extender is controlled to switch from the first preselected operating point to the third preselected operating point to operate.

In some embodiments, after starting the range extender, the fixed-point control method for the range extender provided in the embodiments of the present invention can further comprise: when the range extender is in an operating state, the remaining state of charge of the power battery is monitored; if it is detected that the remaining state of charge of the power battery is in a decreasing trend, the target vehicle speed interval in which the current vehicle speed of the range-extended electric vehicle is located is determined from the M vehicle speed intervals, and each of the M vehicle speed intervals is further configured with a high-efficiency operating point, and for the same vehicle speed interval in which the high-efficiency operating point and the preselected operating point are configured, the generated power of the range extender at the high-efficiency operating point is greater than that at the preselected operating point; the high-efficiency operating point corresponding to the target vehicle speed interval is acquired; and the range extender is controlled to switch from the current operating point to the high-efficiency operating point corresponding to the target vehicle speed interval to operate. Accordingly, further discharging of the power battery during operation of the range extender can be further avoided, thereby improving reliability.

In some embodiments, the fixed-point control method for the range extender provided in the embodiments of the present invention can further comprise: when the range extender is in an operating state, the remaining state of charge of the power battery is monitored; and if it is detected that the remaining state of charge of the power battery reaches a target state of charge, the range extender is shut down.

The control logic of the fixed-point control method for the range extender provided in the embodiments of the present invention is described below through taking an example in which only two vehicle speed intervals [v1, v2) and [v2, +∞) are defined and a hysteresis speed is v0, which is not intended to limit the present invention:
S1: during driving of the range-extended electric vehicle, monitoring whether a power battery of the range-extended electric vehicle enters a power-depleting state; if it is detected that the power battery enters the power-depleting state, triggering S2;
S2: real-time detecting a vehicle speed V of the range-extended electric vehicle, and proceeding to S3;
S3: determining whether V≥v2 is satisfied; if yes, starting the range extender, and operating the range extender at a preselected operating point 2 after starting, and then proceeding to S5; if no, proceeding to S4;
S4: determining whether V≥v1 is satisfied; if yes, starting the range extender, and operating the range extender at a preselected operating point 1 after starting, and then proceeding to S7; if no, returning to S3;
S5: determining whether the vehicle speed decreases to satisfy v2-v0≤V<v2; if yes, determining whether a maintained duration T for which v2-v0≤V<v2 is satisfied meets T≥T1; if yes, controlling the range extender to switch from the preselected operating point 2 to a transition operating point 2N to operate, and then proceeding to S6; if no, also proceeding to S6;
S6: determining whether the vehicle speed decreases to satisfy v1≤V<v2-v0; if yes, determining whether a maintained duration T for which v1≤V<v2-v0 is satisfied meets T≥T2; if yes, controlling the range extender to switch from the transition operating point 2N to the preselected operating point 1 to operate;
S7: determining whether the vehicle speed increases to satisfy V≥v2; if yes, controlling the range extender to switch from the preselected operating point 1 to the preselected operating point 2 to operate; if no, proceeding to S8;
S8: determining whether the vehicle speed decreases to satisfy v1-v0≤V<v1; if yes, determining whether a maintained duration T for which v1-v0≤V<v1 is satisfied meets T≥T1; if yes, controlling the range extender to switch from the preselected operating point 1 to a transition operating point 1N to operate, and then proceeding to S9; if no, also proceeding to S9;
S9: determining whether the vehicle speed decreases to satisfy V<v1-v0; if yes, determining whether a maintained duration T for which V<v1-v0 is satisfied meets T≥T2; if yes, shutting down the range extender and returning to S2; and
performed fixed-point control on the range extender according to the logic of S2 to S9 in sequence until the remaining state of charge of the power battery reaches the target state of charge, at which point the range extender is shut down and the process returns to S1.

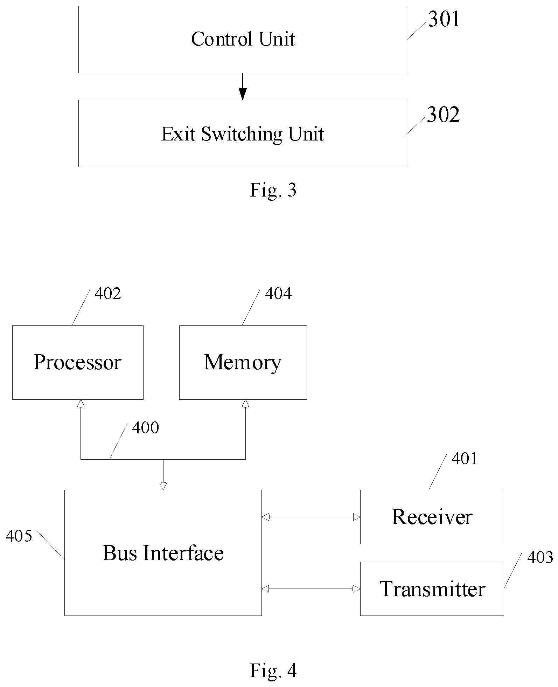

Based on the same inventive concept, the embodiments of the present invention further provide a fixed-point control apparatus for a range extender. As shown in Fig. 3, the fixed-point control apparatus comprises:
a control unit 301, which is configured to, when a vehicle speed of a range-extended electric vehicle is in a first vehicle speed interval, control the range extender of the range-extended electric vehicle to operate at a first preselected operating point, wherein the first preselected operating point is adapted to the first vehicle speed interval; and
an exit switching unit 302, which is configured to, if the vehicle speed of the range-extended electric vehicle decreases from the first vehicle speed interval to a second vehicle speed interval, control the range extender to successively switch from the first preselected operating point to a target transition operating point and a second preselected operating point adapted to the second vehicle speed interval to operate during the vehicle speed decreasing process of the range-extended electric vehicle, wherein a generated power of the range extender at the target transition operating point is equal to that at the first preselected operating point, and an engine rotating speed at the target transition operating point is less than that at the first preselected operating point.

In some embodiments, the exit switching unit 302 comprises: a first switching sub-unit, which is configured to, when the range extender operates at the first preselected operating point, if the vehicle speed of the range-extended electric vehicle decreases to meet a first preset condition, control the range extender to switch from the first preselected operating point to the target transition operating point to operate; and a second switching sub-unit, which is configured to, when the range extender operates at the target transition operating point, if the vehicle speed of the range-extended electric vehicle decreases to meet a second preset condition, control the range extender to switch from the target transition operating point to the second preselected operating point to operate; wherein the first preset condition and the second preset condition at least define the vehicle speed upper limit of the range-extended electric vehicle, and the vehicle speed upper limit defined by the second preset condition is lower than that defined by the first preset condition.

In some embodiments, the fixed-point control apparatus can further comprise: a state-of-charge monitoring unit, which is configured to monitor a remaining state of charge of a power battery of the range-extended electric vehicle when the range extender is in a shutdown state; and a starting unit, which is configured to start the range extender if it is determined that the power battery enters a power-depleting state based on the remaining state of charge of the power battery; and a determining unit, which is configured to determine the first preselected operating point according to a current vehicle speed of the range-extended electric vehicle.

In some embodiments, the determining unit can be configured to: determine the first vehicle speed interval in which the current vehicle speed of the range-extended electric vehicle is located from M vehicle speed intervals pre-divided, wherein M preselected operating points configured to operate the range extender are provided in one-to-one correspondence with the M vehicle speed intervals, and M is an integer greater than 1; and the determining unit can be further configured to select a preselected operating point corresponding to the first vehicle speed interval as the first preselected operating point.

In some embodiments, the fixed-point control apparatus can further comprise: a first condition determining unit, which is configured to, when the range extender operates at the first preselected operating point, if a maintained duration for which the vehicle speed of the range-extended electric vehicle decreases to be less than a first vehicle speed threshold and not less than a second vehicle speed threshold reaches a first duration threshold, determine that the vehicle speed of the range-extended electric vehicle decreases to meet the first preset condition; wherein the second vehicle speed interval is adjacent to the first vehicle speed interval, the first vehicle speed threshold and the second vehicle speed threshold are within the second vehicle speed interval, and the second vehicle speed threshold is lower than the first vehicle speed threshold.

In some embodiments, the fixed-point control apparatus can further comprise: a second condition determining unit, which is configured to, when the range extender operates at the target transition operating point, if a maintained duration for which the vehicle speed of the range-extended electric vehicle decreases to be less than the second vehicle speed threshold and not less than a lower limit of the second vehicle speed interval reaches a second duration threshold, determine that the vehicle speed of the range-extended electric vehicle decreases to meet the second preset condition.

In some embodiments, the fixed-point control apparatus can further comprise: an entering switching unit, which is configured to, when the range extender operates at the first preselected operating point, if the vehicle speed of the range-extended electric vehicle increases from the first vehicle speed interval to a third vehicle speed interval, select a third preselected operating point corresponding to the third vehicle speed interval from the M preselected operating points, wherein the generated power of the range extender at the third preselected operating point is greater than that at the first preselected operating point; and the entering switching unit is further configured to control the range extender to switch from the first preselected operating point to the third preselected operating point to operate.

In some embodiments, the fixed-point control apparatus can further comprise: a state-of-charge monitoring unit, which is configured to monitor a remaining state of charge of a power battery when the range extender is in an operating state; a vehicle speed interval determining unit, which is configured to, if the remaining state of charge of the power battery is in a decreasing trend, determine a target vehicle speed interval in which the current vehicle speed of the range-extended electric vehicle is located from the M vehicle speed intervals, wherein M high-efficiency operating points are provided in one-to-one correspondence with the M vehicle speed intervals, and for a same vehicle speed interval in which a preselected operating point and a high-efficiency operating point are configured, the generated power of the range extender at the high-efficiency operating point is greater than that at the preselected operating point; and an operating point determining unit, which is configured to acquire the high-efficiency operating point corresponding to the target vehicle speed interval, and control the range extender to switch from the current operating point to the high-efficiency operating point corresponding to the target vehicle speed interval to operate.

In some embodiments, the fixed-point control apparatus can further comprise: a state-of-charge monitoring unit, which is configured to monitor a remaining state of charge of a power battery when the range extender is in an operating state; and a shutdown unit, which is configured to shut down the range extender if it is detected that the remaining state of charge of the power battery rises to a target state of charge.

In some embodiments, the M preselected operating points are optimal efficiency points corresponding to M different generated powers provided by the range extender.

In some embodiments, for each of the M preselected operating points, one or more transition operating points adapted to the preselected operating point are respectively configured.

Since the apparatus described in this embodiment is an apparatus configured to implement the fixed-point control method for the range extender in the embodiments of the present invention, those skilled in the art can understand the specific implementation and various variations thereof based on the fixed-point control method for the range extender described in the embodiments of the present invention. Therefore, details of how the electronic device implements the method in the embodiments of the present invention are not further described herein. Any apparatus adopted for implementing the fixed-point control method for the range extender according to the embodiments of the present invention by those skilled in the art shall fall within the protection scope of the present invention.

Based on the same inventive concept, the embodiments of the present invention further provide a range-extended electric vehicle. As shown in Fig. 4, the range-extended electric vehicle comprises a memory 404, a processor 402, and a computer program stored in the memory 404 and executable on the processor 402, and the processor 402, when executing the program, implements the fixed-point control method for the range extender described above.

In Fig. 4, a bus architecture (represented by a bus 400) is provided, and the bus 400 can comprise any number of interconnected buses and bridges, linking together various circuits of one or more processors represented by the processor 402 and memories represented by the memory 404. The bus 400 can further link various other circuits, such as peripheral devices, voltage regulators, and power management circuits, which are well known in the art, and thus will not be described in further detail herein. A bus interface 405 provides an interface between the bus 400 and a receiver 401 and a transmitter 403. The receiver 401 and the transmitter 403 can be the same component, namely a transceiver, providing units for communication with various other devices over a transmission medium. The processor 402 is responsible for managing the bus 400 and perform general processing, while the memory 404 can be configured to store data utilized by the processor 402 during execution of operations.

Based on the same inventive concept, the embodiments of the present invention further provide a computer-readable storage medium, with a computer program stored thereon, and the program, when executed by a processor, implements the fixed-point control method for the range extender described above.

According to the technical solutions of one or more embodiments of the present invention, at least the following technical effects or advantages are achieved: when the vehicle speed of the range-extended electric vehicle decreases from the first vehicle speed interval to the second vehicle speed interval, the range extender is controlled to successively switch from the first preselected operating point adapted to the first vehicle speed interval to the target transition operating point and the second preselected operating point adapted to the second vehicle speed interval to operate, the generated power of the range extender at the target transition operating point is equal to that at the first preselected operating point, and the engine rotating speed at the target transition operating point is less than that at the first preselected operating point. The above technical solution additionally introduces the transition operating point, such that during the vehicle speed decreasing process after the range extender exits the first preselected operating point, the engine torque is first increased and the engine rotating speed is reduced to achieve the same generated power as the first preselected operating point, and since the lower engine rotating speed of the range extender results in the better NVH performance, reducing the engine rotating speed enables the NVH performance to meet the requirements of relatively higher vehicle speed points within the second vehicle speed interval without reducing the generated power. As the vehicle speed continues to decrease, the range extender is then switched to the second preselected operating point adapted to the second vehicle speed interval to operate, thereby also taking economy into consideration.

Those skilled in the art should understand that the embodiments of the present invention can be provided as methods, systems, or computer program products. Therefore, the present invention can adopt the form of a complete hardware embodiment, a complete software embodiment, or an embodiment combining software and hardware. Furthermore, the present invention can be in the form of a computer program product implemented in one or more computer available storage media (comprising but not limited to disk memory, CD-ROM and optical memory, etc.) with computer available program codes.

The present invention is described with reference to flowcharts and/or block diagrams of methods, devices (systems), and computer program products in embodiments of the present invention. It should be understood that each flow and/or block in a flow diagram and/or block diagram, as well as the combination of the flow and/or block in the flow diagram and/or block diagram, can be implemented by computer program instructions. These computer program instructions can be provided to a general-purpose computer, a special-purpose computer, an embedded processor, or other programmable data processing equipment so as to generate a machine, so that the instructions executed by the computer or other programmable data processing equipment are caused to generate a device for implementing the functions specified in one or more processes in the flowchart and/or one or more blocks in the block diagram.

These computer program instructions can also be stored in a computer readable memory capable of directing a computer or other programmable data processing devices to work in a particular manner, so that the instructions stored in the computer readable memory produce an article of manufacture comprising a command device. The command device implements the functions specified in one or more flows in the flow diagram and/or one or more blocks in the block diagram.

These computer program instructions can also be loaded onto a computer or other programmable data processing device, so that a series of steps are executed on the computer or other programmable equipment to produce computer-implemented processing, thus, the instructions executed on the computer or other programmable devices provide steps for implementing the functions specified in one or more flows in the flow diagram and/or one or more blocks in the block diagram.

Even though the preferred embodiments of the present invention have been described, those skilled in the art, once aware of the underlying inventive concept, can make various modifications and changes to these embodiments. Therefore, the appended claims are intended to be construed to comprise the preferred embodiments as well as all modifications and variations that fall within the protection scope of the present invention.

Obviously, those skilled in the art can make various modifications and variations to the present invention without departing from the spirit and scope of the present invention. Thus, in the event that these modifications and variations of the present invention are within the protection scope of the claims and the equivalents thereof, the present invention also intends to comprise such modifications and variations.

## Claims

1. A fixed-point control method for a range extender, comprising:
when a vehicle speed of a range-extended electric vehicle is in a first vehicle speed interval, controlling the range extender of the range-extended electric vehicle to operate at a first preselected operating point, wherein the first preselected operating point is adapted to the first vehicle speed interval; and
if the vehicle speed of the range-extended electric vehicle decreases from the first vehicle speed interval to a second vehicle speed interval, controlling the range extender to successively switch from the first preselected operating point to a target transition operating point and a second preselected operating point adapted to the second vehicle speed interval to operate during the vehicle speed decreasing process of the range-extended electric vehicle, wherein a generated power of the range extender at the target transition operating point is equal to that at the first preselected operating point, and an engine rotating speed at the target transition operating point is less than that at the first preselected operating point.

2. The method according to claim 1, wherein the step of controlling the range extender to successively switch from the first preselected operating point to the target transition operating point and the second preselected operating point adapted to the second vehicle speed interval to operate during the vehicle speed decreasing process of the range-extended electric vehicle comprises:
when the range extender operates at the first preselected operating point, if the vehicle speed of the range-extended electric vehicle decreases to meet a first preset condition, controlling the range extender to switch from the first preselected operating point to the target transition operating point to operate; and
when the range extender operates at the target transition operating point, if the vehicle speed of the range-extended electric vehicle decreases to meet a second preset condition, controlling the range extender to switch from the target transition operating point to the second preselected operating point to operate;
wherein the first preset condition and the second preset condition at least define the vehicle speed upper limit of the range-extended electric vehicle, and the vehicle speed upper limit defined by the second preset condition is lower than that defined by the first preset condition.

3. The method according to claim 2, wherein before the step of controlling the range extender of the range-extended electric vehicle to operate at the first preselected operating point, the method further comprises:
when the range extender is in a shutdown state, monitoring a remaining state of charge of a power battery of the range-extended electric vehicle; and
if it is determined that the power battery enters a power-depleting state based on the remaining state of charge of the power battery, starting the range extender and determining the first preselected operating point according to a current vehicle speed of the range-extended electric vehicle.

4. The method according to claim 3, wherein the step of determining the first preselected operating point according to the current vehicle speed of the range-extended electric vehicle comprises:
determining the first vehicle speed interval in which the current vehicle speed of the range-extended electric vehicle is located from M vehicle speed intervals pre-divided, wherein M preselected operating points configured to operate the range extender are provided in one-to-one correspondence with the M vehicle speed intervals, and M is an integer greater than 1; and
selecting a preselected operating point corresponding to the first vehicle speed interval as the first preselected operating point.

5. The method according to claim 4, wherein the method further comprises:
when the range extender operates at the first preselected operating point, if a maintained duration for which the vehicle speed of the range-extended electric vehicle decreases to be less than a first vehicle speed threshold and not less than a second vehicle speed threshold reaches a first duration threshold, determining that the vehicle speed of the range-extended electric vehicle decreases to meet the first preset condition;
wherein the second vehicle speed interval is adjacent to the first vehicle speed interval, the first vehicle speed threshold and the second vehicle speed threshold are within the second vehicle speed interval, and the second vehicle speed threshold is lower than the first vehicle speed threshold.

6. The method according to claim 5, wherein the method further comprises:
when the range extender operates at the target transition operating point, if a maintained duration for which the vehicle speed of the range-extended electric vehicle decreases to be less than the second vehicle speed threshold and not less than a lower limit of the second vehicle speed interval reaches a second duration threshold, determining that the vehicle speed of the range-extended electric vehicle decreases to meet the second preset condition.

7. The method according to claim 4, wherein the method further comprises:
when the range extender operates at the first preselected operating point, if the vehicle speed of the range-extended electric vehicle increases from the first vehicle speed interval to a third vehicle speed interval, selecting a third preselected operating point corresponding to the third vehicle speed interval from the M preselected operating points, wherein the generated power of the range extender at the third preselected operating point is greater than that at the first preselected operating point; and
controlling the range extender to switch from the first preselected operating point to the third preselected operating point to operate.

8. The method according to claim 4, wherein after the step of starting the range extender, the method further comprises:
when the range extender is in an operating state, monitoring the remaining state of charge of the power battery;
if the remaining state of charge of the power battery is in a decreasing trend, determining a target vehicle speed interval in which the current vehicle speed of the range-extended electric vehicle is located from the M vehicle speed intervals, wherein M high-efficiency operating points are provided in one-to-one correspondence with the M vehicle speed intervals, and for the same vehicle speed interval in which a preselected operating point and a high-efficiency operating point are configured, the generated power of the range extender at the high-efficiency operating point is greater than that at the preselected operating point; and
acquiring the high-efficiency operating point corresponding to the target vehicle speed interval, and controlling the range extender to switch from the current operating point to the high-efficiency operating point corresponding to the target vehicle speed interval to operate.

9. The method according to claim 4 or 8, wherein, after the step of starting the range extender, the method further comprises:
when the range extender is in an operating state, monitoring the remaining state of charge of the power battery; and
if it is detected that the remaining state of charge of the power battery rises to a target state of charge, shutting down the range extender.

10. The method according to claim 4, wherein the M preselected operating points are optimal efficiency points corresponding to M different generated powers provided by the range extender.

11. The method according to claim 4, wherein for each of the M preselected operating points, one or more transition operating points adapted to the preselected operating point are respectively configured.

12. A fixed-point control apparatus for a range extender, comprising:
a control unit, which is configured to, when a vehicle speed of a range-extended electric vehicle is in a first vehicle speed interval, control the range extender of the range-extended electric vehicle to operate at a first preselected operating point, wherein the first preselected operating point is adapted to the first vehicle speed interval; and
an exit switching unit, which is configured to, if the vehicle speed of the range-extended electric vehicle decreases from the first vehicle speed interval to a second vehicle speed interval, control the range extender to successively switch from the first preselected operating point to a target transition operating point and a second preselected operating point adapted to the second vehicle speed interval to operate during the vehicle speed decreasing process of the range-extended electric vehicle, wherein a generated power of the range extender at the target transition operating point is equal to that at the first preselected operating point, and an engine rotating speed at the target transition operating point is less than that at the first preselected operating point.

13. The apparatus according to claim 12, wherein the exit switching unit comprises:
a first switching sub-unit, which is configured to, when the range extender operates at the first preselected operating point, if the vehicle speed of the range-extended electric vehicle decreases to meet a first preset condition, control the range extender to switch from the first preselected operating point to the target transition operating point to operate; and
a second switching sub-unit, which is configured to, when the range extender operates at the target transition operating point, if the vehicle speed of the range-extended electric vehicle decreases to meet a second preset condition, control the range extender to switch from the target transition operating point to the second preselected operating point to operate;
wherein the first preset condition and the second preset condition at least define the vehicle speed upper limit of the range-extended electric vehicle, and the vehicle speed upper limit defined by the second preset condition is lower than that defined by the first preset condition.

14. A range-extended electric vehicle, comprising a memory, a processor, and a computer program stored on the memory and executable on the processor, wherein the processor, when executing the computer program, implements the steps of the method according to any one of claims 1-11.

15. A computer-readable storage medium, with a computer program stored thereon, wherein the program, when executed by a processor, implements the steps of the method according to any one of claims 1-11.
